# FASCICULE DE BREVET EUROPEEN

(11) **EP 3 488 683 B1**
(45) Date de publication et mention de la délivrance du brevet: **22.03.2023**
(21) Numéro de dépôt: 18206965.8
(22) Date de dépôt: 19.11.2018
(51) Int. Cl.: A01D 46/28, B65G 17/06

(54) **ECAILLE PERFECTIONNÉE POUR UN DISPOSITIF DE COLLECTE DE RÉCOLTE, ET DISPOSITIF DE RÉCOLTE**
VERBESSERTE PLATTE FÜR EINE ERNTE-SAMMLUNGSEINRICHTUNG UND ERNTEVORRICHTUNG
IMPROVED PLATE FOR A HARVEST COLLECTION DEVICE, AND HARVEST DEVICE

(30) Priorité: 23.11.2017 FR 1761079
(43) Date de publication de la demande: 29.05.2019
(73) Titulaire: Gregoire, 16100 Cognac (FR)
(72) Inventeur: PELLETIER, Etienne, 16370 Cherves-Richemont (FR)
(74) Mandataire: Novagraaf Technologies

(56) Documents cités:
- EP-A1- 1 949 783
- EP-B1- 1 949 783
- FR-A1- 2 983 677
- US-A- 3 538 694
- US-A1- 2003 000 810

## Description

### DOMAINE TECHNIQUE DE L'INVENTION

L'invention concerne une conception perfectionnée d'une écaille pour un dispositif de réception de récolte constitué d'écailles, susceptible d'équiper une machine à vendanger.

L'invention concerne aussi un dispositif équipé de telles écailles.

L'invention concerne plus particulièrement les écailles de dispositifs de récolte faisant appel à un dispositif gonflable de rappel des écailles.

### ARRIERE PLAN TECHNIQUE DE L'INVENTION

L'invention concerne plus particulièrement un dispositif du type de celui illustré dans le document FR-A1-2.983.677 qui comprend un support sur lequel sont rapportées plusieurs écailles les unes à la suite des autres, chaque écaille comprenant un plateau et étant reliée au support par une articulation lui permettant de pivoter par rapport au support entre une position initiale dans laquelle les plateaux des écailles forment une surface de collecte de récolte et une position d'évitement d'un obstacle, et comprenant des moyens de rappel tendant à maintenir l'écaille dans sa position initiale, et dans lequel les moyens de rappel comprennent une enveloppe souple gonflable en contact avec les écailles, qui est apte à se déformer lorsque l'écaille pivote vers la position d'évitement en raison d'un effort exercé par un obstacle sur l'écaille et à exercer un effort pour que chaque écaille revienne en position initiale lorsque l'obstacle n'exerce plus d'effort.

L'enveloppe souple gonflable est réalisée sous la forme d'un boudin gonflable qui, longitudinalement de place en place au droit de chaque écaille, est monté pincé verticalement entre le support et une platine de fixation de l'écaille sur le support du dispositif de collecte de récolte.

A cet effet, chaque platine de fixation comporte une surface de pincement d'un tronçon longitudinal de l'enveloppe souple gonflable qui est interposé verticalement entre la surface de pincement et une portion en vis-à-vis du support.

Comme on peut le voir notamment aux figures 3 à 6 de ce document, chaque platine de fixation est une plaque de fixation qui est fixée au moyen d'une paire de vis transversalement opposées dont chacune traverse de manière la plus étanche possible le corps souple du boudin gonflable, tandis qu'une portion longitudinale du boudin n'est pas pincée par les platines de fixation de manière à permettre la communication fluidique entre elles de chacune des portions longitudinales du boudin dont chacune s'étend entre deux écailles adjacentes.

Une telle conception permet d'assurer un rappel efficace des écailles, mais elle a pour inconvénient d'une part de produire des fuites au niveau des orifices formés dans le boudin gonflable pour le passage des vis de fixation et, d'autre part, de rendre complexe l'assemblage et la fixation du boudin gonflable et des écailles sur le support, et ceci d'autant plus que les écailles sont des pièces d'usure devant être remplacées régulièrement.

Le document EP-1.949.783 illustre une conception d'une écaille correspondant au préambule de la revendication 1 qui comporte un plateau ; et une platine de fixation de l'écaille sur un support du dispositif de collecte de récolte,

### BREF RESUME DE L'INVENTION

Afin de remédier à ces inconvénients, l'invention propose une écaille pour un dispositif de collecte de récolte qui comporte :
- un plateau ;
- et une platine de fixation de l'écaille sur un support du dispositif de collecte de récolte,
caractérisée en ce que la platine de fixation comporte une surface de pincement qui comporte un évidement central traversant qui débouche longitudinalement à ses deux extrémités, et qui est apte à recevoir un tronçon longitudinal d'une enveloppe souple gonflable interposée verticalement entre la surface de pincement et une portion en vis-à-vis du support.

Selon d'autres caractéristiques l'écaille :
- la platine de fixation est conformée en une bride de fixation qui comporte deux talons de fixation, et l'évidement s'étend transversalement entre les deux talons de fixation ;
- l'évidement central traversant est délimité par une portion de surface centrale ;
- l'évidement central traversant est délimité par une portion de surface centrale concave, notamment en arc de cylindre d'axe longitudinal, ou par une portion de surface centrale plane ;
- l'évidement central traversant est délimité par deux portions de surface plane agencées transversalement de part et d'autre de la portion de surface centrale ;
- que chaque talon de fixation est délimité par une surface plane d'appui sur une portion en vis à vis du support ;
- chaque talon comporte un trou traversant de fixation de la platine.

L'invention propose aussi un dispositif de collecte de récolte comprenant :
- un support sur lequel plusieurs écailles sont fixées longitudinalement les unes à la suite des autres, chaque écaille comprenant un plateau et étant reliée au support par une articulation lui permettant de pivoter par rapport au support entre une position initiale dans laquelle les plateaux des écailles forment une surface de collecte de récolte et une position d'évitement d'un obstacle ;
- et des moyens de rappel d'au moins une écaille vers sa position initiale qui comportent une enveloppe souple gonflable en contact avec ladite au moins une écaille, qui est apte à se déformer lorsque l'écaille pivote vers la position d'évitement en raison d'un effort exercé par un obstacle sur l'écaille et qui est apte à exercer un effort pour que l'écaille revienne en position initiale lorsque l'obstacle n'exerce plus d'effort,
caractérisé en ce que ladite au moins une écaille est réalisée selon l'invention, et un tronçon de l'enveloppe souple gonflable est reçu dans ledit évidement central traversant de cette au moins une écaille.

Selon d'autres caractéristiques du dispositif :
- le support comporte une aile plane sur laquelle sont fixées les écailles ;
- plusieurs des écailles sont réalisées selon l'invention et l'enveloppe souple gonflable se présente sous la forme d'un boudin qui est pincé entre une portion en vis-à-vis d'une surface du support et les platines de fixation de chacune desdites plusieurs écailles selon l'invention.

Grâce à l'invention, l'enveloppe gonflable ne comporte plus de trous traversant pour le passage des vis de fixation des écailles et il n'y a plus de fuites au droit des platines de fixation.

De plus, l'assemblage et la fixation sont grandement simplifiés car le boudin gonflable est logé et maintenu par pincement ou serrage partiel dans les évidements des brides de fixation des écailles et il n'est plus nécessaire d'aligner des trous du boudin gonflable avec ceux des platines de fixation comme cela était le cas dans l'art antérieur.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1A est une vue de dessus de deux dispositifs de collecte de récolte disposés de manière symétrique par rapport à un plan longitudinal et vertical médian ;
- la figure 1B est une vue de dessus des deux dispositifs de collecte de récolte de la figure 1A lors du passage d'un obstacle entre les deux dispositifs en cours de collecte ;
- la figure 2 est une vue en perspective d'une écaille selon l'invention ;
- la figure 3 est une vue en perspective selon un autre angle de vue de l'écaille de la figure 2 ;

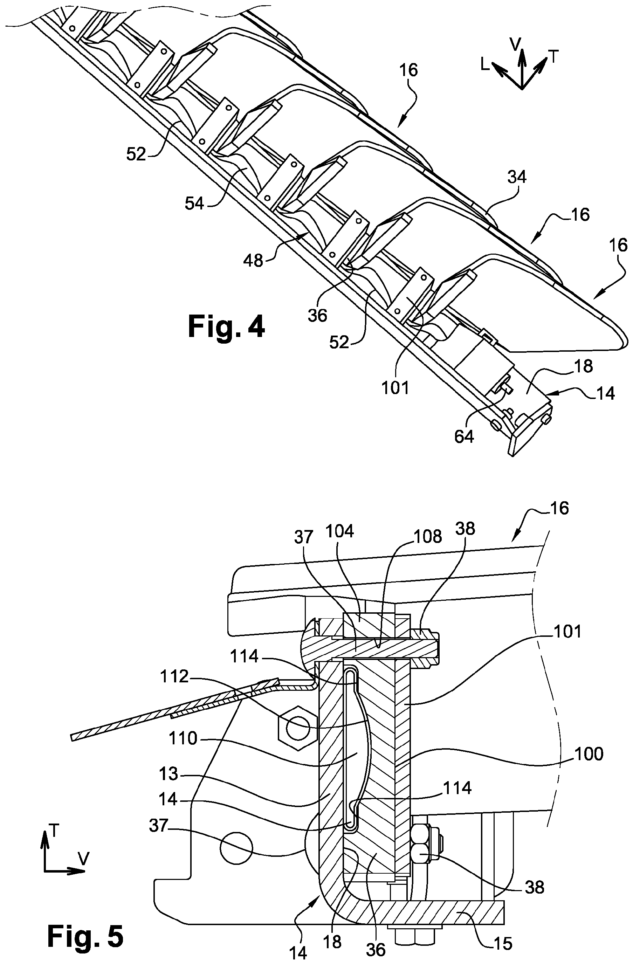

- la figure 4 est une vue en perspective de dessous d'un dispositif de collecte de récolte selon l'invention ;
- la figure 5 est une coupe par un plan vertical et transversal passant par une platine de fixation d'une écaille du dispositif de la figure 4 ;

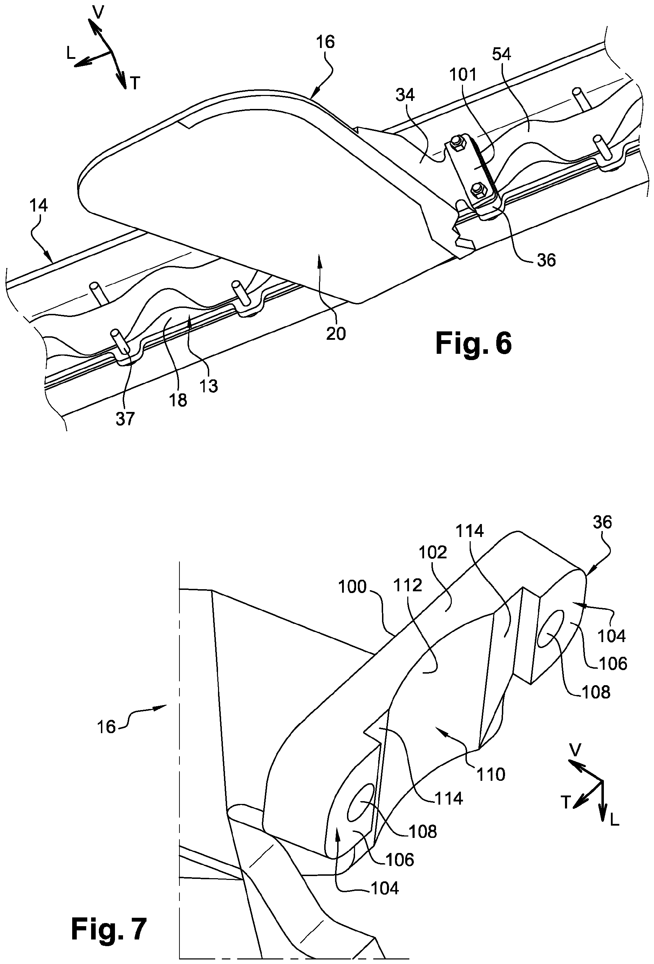

- la figure 6 est une vue en perspective d'un boudin gonflable équipant un dispositif de collecte de récolte selon l'invention ;
- la figure 7 est une vue en perspective de détail à plus grande échelle d'une platine de fixation d'une écaille selon l'invention.

### DESCRIPTION DETAILLEE DES FIGURES

Dans la suite de la description, des éléments présentant une structure identique ou des fonctions analogues seront désignés par des mêmes références.

Dans la suite de la description, on adoptera de manière non limitative et sans référence à la gravité terrestre des orientations longitudinale, verticale et transversale indiquées par le trièdre "L,V,T" sur certaines figures. On définit aussi un plan horizontal qui s'étend longitudinalement et transversalement.

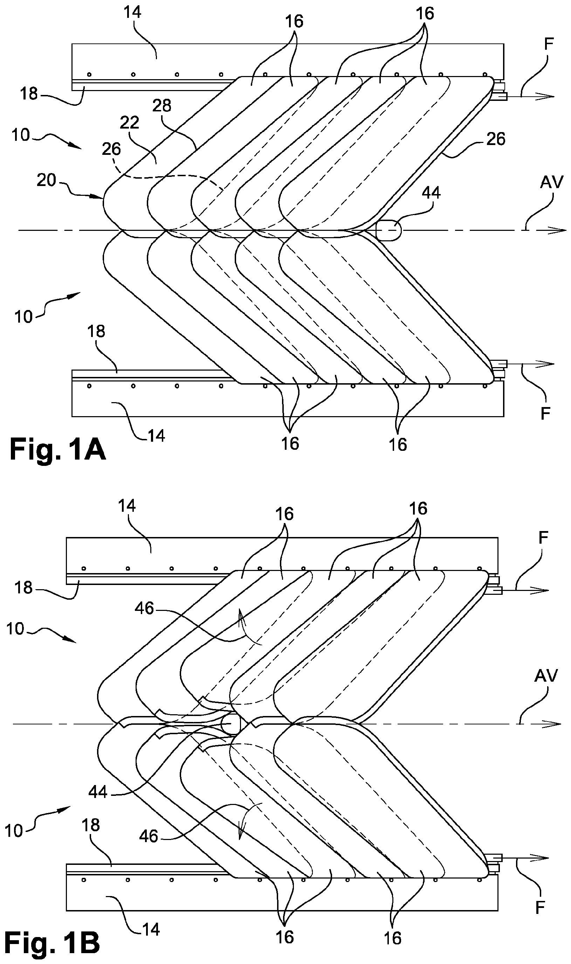

Comme illustré aux figures 1A et 1B, une machine à vendanger est équipée de deux dispositifs de réception 10 qui sont disposés de manière symétrique par rapport à un plan médian de symétrie passant par un axe longitudinal A qui est orienté d'arrière en avant selon le sens de déplacement de la machine à vendanger indiqué par les flèches F.

Chaque dispositif de réception 10 comprend une rampe 14 supportant une série d'écailles 16 qui sont disposées les unes à la suite des autres le long de la rampe 14.

Selon un mode de réalisation illustré aux figures, une rampe ou support 14 est essentiellement constituée d'un profilé métallique avec une section rectangulaire dont la longueur est disposée approximativement verticalement ou une section en L à deux ailes orthogonales 13 et 15 dont une aile 13 est orientée approximativement verticalement.

L'aile 13 de la rampe 14 comporte une surface 18 sensiblement plane et verticale sur laquelle sont fixées les écailles 16.

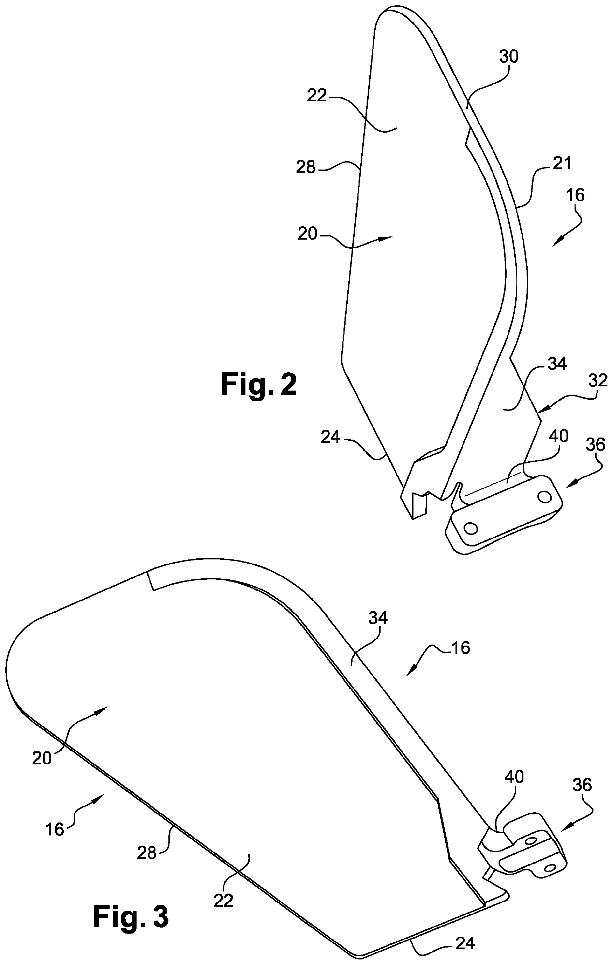

Comme illustré en détail aux figures 2 et 3, chaque écaille 16 est essentiellement constituée d'un plateau 20 avec une surface supérieure 22 sensiblement plate sur laquelle tombe la récolte, et notamment la vendange.

Chaque plateau 20 est délimité par un bord latéral 24 sensiblement rectiligne adjacent à la rampe 14, un bord avant 26 rectiligne et qui est susceptible d'être en contact avec un obstacle lors des opérations de récolte, un bord arrière 28 rectiligne et un bord d'extrémité libre 30 arrondi convexe.

Chaque écaille 16 comprend une nervure 32 qui s'étend depuis le bord avant 26 perpendiculairement à la surface inférieure 21 du plateau 20.

Cette nervure 32 comprend une partie principale 34 de rigidification située sous le plateau 20 qui est orientée approximativement parallèlement au bord avant 26, dans le prolongement du bord avant ou légèrement décalée vers l'arrière par rapport au bord avant 26.

La partie principale 34 de la nervure 32 se prolonge par une seconde partie 36 de fixation formant avec la première partie un angle obtu, de l'ordre de 100 à 150°.

Cette seconde partie 36 constitue une platine de fixation de l'écaille 16 qui est fixée à la rampe 14 par une paire de systèmes vis 37 - écrous 38, ou par toute autres paires d'éléments de fixation analogues équivalents.

La première partie 34 de la nervure 32 rigidifie le plateau 20 tandis que la partie 40 de raccordement entre les deux parties 34 et 36 constitue une articulation 40 permettant à l'écaille 16 de pivoter légèrement vers l'arrière de manière à permettre le passage d'un obstacle 44.

Cette articulation 40 est suffisamment élastique pour permettre un pivotement de l'écaille 16 dans un premier sens, puis le retour de l'écaille dans la position initiale par pivotement dans l'autre sens.

Selon un mode de réalisation connu, le plateau 20 et la nervure 32 avec ses deux trois parties 34, 40 et 36 sont réalisés d'un seul tenant avec le même matériau.

Comme illustré aux figures 1A et 1B, les bords latéraux 24 des écailles 16 sont alignés au niveau de la rampe 14 qui les supporte de manière que les écailles 16 soient chevauchantes et forment par leurs surfaces supérieures 22 une surface de collecte pour la récolte.

Ainsi, le bord arrière 28 d'une première écaille 16 est disposé au-dessus du plateau 20 de l'écaille 16 suivante, le bord avant 24 de cette écaille étant disposé sous le plateau 20 de l'écaille adjacente.

En fonctionnement lors d'une vendange, comme illustré aux figures 1A et 1B, les deux dispositifs 10 de collecte se déplacent selon la direction de déplacement de l'engin matérialisée par l'axe A, l'axe longitudinal A étant disposé au droit du rang de vigne.

Lorsqu'un pied de vigne 44 vient en contact contre une écaille 16, il provoque le pivotement vers l'arrière de l'écaille 16 - comme matérialisé par les flèches 46 de la figure 1B - à l'encontre de l'effet de rappel élastique assuré par la partie d'articulation 40.

Après le passage du pied 44, l'écaille pivote vers l'avant pour reprendre sa position initiale.

Le plateau 20 doit être suffisamment résistant pour pouvoir résister aux chocs. En complément, l'articulation 40 doit être suffisamment élastique pour permettre le pivotement de l'écaille et son retour dans sa position initiale.

Aussi, il est nécessaire d'établir un compromis entre ces différentes contraintes pour choisir le matériau. Lorsqu'elles sont neuves, ces écailles 16 donnent satisfaction.

Toutefois, avec le temps, le matériau a tendance à perdre ses propriétés élastiques si bien que les écailles 16 ont tendance à rester en position pivotée vers l'arrière et à laisser des espaces entre elles qui provoquent des pertes de récolte.

Ainsi, de manière connue, en plus de la capacité élastique de l'articulation 40 de chaque écaille 16 pour le retour en position initiale de l'écaille 16, il est prévu des moyens de rappel qui comportent une enveloppe souple gonflable 48 - contenant un fluide - qui est en contact avec l'écaille 16 et qui est apte à se déformer lorsque l'écaille 16 pivote vers l'arrière et à exercer un effort de rappel vers l'avant sur l'écaille 46 lorsque l'obstacle n'exerce plus d'effort afin que l'écaille revienne en position initiale.

Lorsque l'écaille 16 est dans la position initiale, l'enveloppe souple gonflable 48 est en contact avec la première partie 34 de la nervure 32 et plus particulièrement avec la partie adjacente à la partie 40 d'articulation.

L'enveloppe souple gonflable 48 contient par exemple un gaz sous pression, par exemple de l'air. Dans ce cas, la propriété compressible du gaz assure la fonction élastique des moyens de rappel.

Avantageusement, le gaz contenu dans l'enveloppe souple gonflable 48 a une pression comprise entre 0,3 bar et 2 bars.

Selon une variante, l'enveloppe souple gonflable 48 contient un liquide. Dans ce cas, la circulation du fluide et son retour dans l'enveloppe souple gonflable située à l'arrière de l'écaille qui vient de franchir un obstacle permet à cette dernière de revenir dans sa position initiale.

Le retour du fluide peut provenir de l'action d'une autre écaille qui pivote vers l'arrière en raison d'un obstacle et qui comprime l'enveloppe souple gonflable située juste après elle et chasse le fluide ou d'un réservoir sous pression qui permet de compenser la variation de volume de la ou des enveloppes souples.

Selon un mode de réalisation, chaque écaille 16 est associée à une enveloppe souple gonflable 48 propre. Ainsi, le dispositif de collecte de récolte comprend autant d'enveloppes souples gonflables 48 que d'écailles 16.

Selon un mode de réalisation préféré illustré aux figures, une enveloppe souple gonflable 48 est en contact et coopère avec plusieurs écailles successives.

Dans ce cas, l'enveloppe souple gonflable 48 se présente sous la forme d'un boudin 52, en forme de tube qui s'étend longitudinalement le long de la surface 18 du support 14.

Ce boudin 52 est pincé entre la surface 18 du support et les platines de fixation 36 de chaque écaille 16 et forme un bourrelet 54 entre deux platines de fixation consécutives 36.

Le boudin 52 est par exemple réalisé à partir d'un tuyau en matière plastique renforcé par une toile. Le boudin 52 est obturé à une première extrémité par une soudure. Le boudin 52 est aussi obturé à sa seconde extrémité par une valve 64 qui permet de remplir le boudin et d'ajuster la pression du gaz contenu dans le boudin.

En complément, on peut prévoir un système pour ajuster la pression à l'intérieur de la ou des enveloppes souples gonflables 48. Avantageusement, les pressions des enveloppes souples et gonflables peuvent être ajustées indépendamment les unes des autres. La ou les enveloppes souples et gonflables peuvent communiquer avec un détendeur qui assure une pression constante et rend possible le réglage du système sur le lieu d'utilisation.

Lors du montage, le boudin 52 est mis en place dégonflé. En suivant, les écailles sont fixées sur le support. Lorsque toutes les écailles sont fixées, le boudin 52 est gonflé avec de l'air comprimé. Après le gonflage, la valve 64 est fermée. Selon un autre avantage, l'utilisateur peut ajuster comme bon lui semble la raideur des moyens de rappel et éventuellement différencier les raideurs en fonction des boudins.

On décrira maintenant en détail la conception selon l'invention se chaque platine de fixation 36.

Comme on peut le voir aux figures, une platine de fixation 36 se présente sous la forme d'une bride de fixation de l'écaille 36 sur le support 14.

Chaque platine de fixation 36 est aussi une platine de maintien et de pincement d'un tronçon associé de l'enveloppe souple 48 en forme de boudin gonflable 52.

La platine de fixation 36 est une plaque qui est délimitée par une face supérieure plane 100 et par une face transversale orthogonale 102.

A chacune de ses deux extrémités transversales opposées, la platine de fixation 36 comporte un talon 104 de fixation qui est délimité par une portion de surface plane 106.

Les deux portions de surface plane 106 sont coplanaires.

A titre non limitatif, les deux portions de surface plane 106 sont ici parallèles à la face supérieure 100.

Chaque portion de surface plane 106 est une surface d'appui plan du talon de fixation 104 sur une portion en vis-à-vis de la surface 18.

Chaque talon de fixation 104 comporte un trou traversant 108 de fixation pour le passage d'une vis associée 37 de fixation et de serrage portée par l'aile 13.

Chaque trou traversant 108 s'étend ici selon la direction verticale orthogonale au plan horizontal de la surface plane associée 106 qui est parallèle aux directions transversale et longitudinale.

Entre les deux talons de fixation 104 transversalement opposés, la platine de fixation 36 comporte un évidement central traversant 110 qui débouche longitudinalement à ses deux extrémités et notamment dans la face transversale 102.

Ainsi, l'évidement central traversant 110 s'étend selon une direction longitudinale globalement orthogonale à la direction transversale selon laquelle s'étend la platine de fixation 36.

L'évidement 110 constitue un logement qui est apte à recevoir un tronçon de l'enveloppe gonflable 48 en forme de boudin.

L'évidement 110 comporte une partie principale centrale 112 délimitée par une portion de surface qui, à titre non limitatif, est ici une surface concave sensiblement en arc de cylindre d'axe longitudinal.

Selon une variante non représentée, la partie centrale 112 peut par exemple être délimitée par une portion de surface plane centrale globalement parallèle à la surface 18.

De part et d'autre de la portion centrale 112, l'évidement 110 comporte une portion de surface plane 114 de serrage qui est parallèle au plan des portions de surface plane d'appui 106.

A titre non limitatif, le montage et le serrage de la platine de fixation 36 au moyen des deux écrous 38 sont assurés au moyen d'une plaque intermédiaire de serrage 101.

Un tronçon du boudin 52 constituant l'enveloppe gonflable 48 est pincé le long de chacun de ses bords longitudinaux entre la surface plane 18 du support 14 et les portions de surface plane 114 de serrage de la platine de fixation 36.

En position montée et fixée de la platine de fixation 36 sur une portion en vis-à-vis de surface 18, le tronçon du boudin 52 s'étend longitudinalement dans l'évidement longitudinal traversant 110 qui est fermé verticalement vers le bas par ladite potion en vis-à-vis de surface 18.

La partie centrale du tronçon du boudin 52 qui est reçue dans la portion centrale concave 112 d'un évidement 110 permet la circulation du fluide contenu dans l'enveloppe souple gonflable, au droit de la platine de fixation correspondante 36.

## Revendications

1. Ecaille (16) pour un dispositif de collecte de récolte qui comporte :
- un plateau (20) ;
- et une platine (36) de fixation de l'écaille (16) sur un support (14, 18) du dispositif de collecte de récolte,
**caractérisée en ce que** la platine de fixation (36) comporte une surface de pincement qui comporte un évidement (110) central traversant qui débouche longitudinalement à ses deux extrémités et qui est apte à recevoir un tronçon longitudinal d'une enveloppe souple gonflable (48) interposée verticalement entre la surface de pincement et une portion en vis-à-vis (18) du support (14).

2. Ecaille selon la revendication 1, **caractérisée en ce que** la platine de fixation (36) est conformée en une bride de fixation qui comporte deux talons (104) de fixation, et **en ce que** l'évidement (110) central traversant s'étend transversalement entre les deux talons de fixation (104).

3. Ecaille selon la revendication 2, **caractérisée en ce que** l'évidement (110) central traversant est délimité par une portion de surface centrale (112).

4. Ecaille selon la revendication 3, **caractérisée en ce que** l'évidement (110) central traversant est délimité par une portion de surface centrale concave (112) en arc de cylindre d'axe longitudinal, ou par une portion de surface centrale plane.

5. Ecaille selon la revendication 3, **caractérisée en ce que** l'évidement (110) central traversant est délimité par deux portions de surface plane (114) agencées transversalement de part et d'autre de la portion de surface centrale (112).

6. Ecaille selon l'une quelconque des revendications 2 à 5, **caractérisée en ce que** chaque talon de fixation (104) est délimité par une surface plane (106) d'appui sur une portion en vis à vis (18) du support.

7. Ecaille selon l'une quelconque des revendications 2 à 6, **caractérisée en ce que** chaque talon de fixation (104) comporte un trou traversant (108) de fixation de la platine (36).

8. Dispositif de collecte de récolte comprenant :
- un support (14) ;
- plusieurs écailles (16) fixées longitudinalement sur le support (14) les unes à la suite des autres, chaque écaille (16) comprenant un plateau (20) et étant reliée au support (14) par une articulation (40) lui permettant de pivoter par rapport au support entre une position initiale dans laquelle les plateaux (20) des écailles (16) forment une surface de collecte de récolte et une position d'évitement d'un obstacle (44) ;
- et des moyens de rappel d'au moins une écaille (16) vers sa position initiale qui comportent une enveloppe souple gonflable (48) en contact avec ladite au moins une écaille, qui est apte à se déformer lorsque l'écaille pivote vers la position d'évitement en raison d'un effort exercé par un obstacle sur l'écaille et qui est apte à exercer un effort pour que l'écaille revienne en position initiale lorsque l'obstacle n'exerce plus d'effort,
**caractérisé en ce que** ladite au moins une écaille (16) est réalisée selon l'une quelconque des revendications 1 à 7, et **en ce qu'**un tronçon de l'enveloppe souple gonflable (48) est reçu dans ledit évidement (110) central traversant de cette au moins une écaille.

9. Dispositif selon la revendication 8, **caractérisé en ce que** le support (14) comporte une aile plane (13) sur laquelle sont fixées les écailles (16).

10. Dispositif selon l'une des revendications 8 ou 9, **caractérisé en ce que** plusieurs des écailles (16) sont réalisées selon l'une quelconque des revendications 1 à 7, et **en ce que** l'enveloppe souple gonflable (48) se présente sous la forme d'un boudin (52) qui est pincé entre une portion en vis-à-vis d'une surface (18) du support et les platines de fixation (36) de chacune desdites plusieurs écailles (16).

## Patentansprüche

1. Schuppe (16) für eine Erntesammelvorrichtung, die umfasst:
- ein Tablett (20);
- und eine Platine (36) zur Befestigung des Schuppens (16) an einer Halterung (14, 18) der Erntesammelvorrichtung,
**dadurch gekennzeichnet, dass** die Befestigungsplatte (36) eine Klemmfläche umfasst, die eine durchgehende zentrale Aussparung (110) aufweist, die an ihren beiden Enden in Längsrichtung mündet und die geeignet ist, einen Längsabschnitt einer aufblasbaren flexiblen Hülle (48) aufzunehmen, die vertikal zwischen der Klemmfläche und einem gegenüberliegenden Abschnitt (18) des Trägers (14) eingefügt ist.

2. Schuppe nach Anspruch 1, **dadurch gekennzeichnet, dass** die Befestigungsplatine (36) als Befestigungsflansch ausgebildet ist, der zwei Befestigungsansätze (104) aufweist, und dass sich die durchgehende zentrale Aussparung (110) quer zwischen den beiden Befestigungsansätzen (104) erstreckt.

3. Schuppe nach Anspruch 2, **dadurch gekennzeichnet, dass** die durchgehende zentrale Aussparung (110) von einem zentralen Oberflächenabschnitt (112) begrenzt wird.

4. Schuppe nach Anspruch 3, **dadurch gekennzeichnet, dass** die durchgehende zentrale Aussparung (110) von einem konkaven zentralen Oberflächenabschnitt (112) in Form eines Zylinderbogens mit einer Längsachse oder von einem ebenen zentralen Oberflächenabschnitt begrenzt wird.

5. Schuppe nach Anspruch 3, **dadurch gekennzeichnet, dass** die durchgehende zentrale Aussparung (110) von zwei flachen Oberflächenabschnitten (114) begrenzt wird, die quer auf beiden Seiten des zentralen Oberflächenabschnitts (112) angeordnet sind.

6. Schuppe nach einem der Ansprüche 2 bis 5, **dadurch gekennzeichnet, dass** jeder Befestigungsabsatz (104) durch eine ebene Fläche (106) zur Auflage auf einem gegenüberliegenden Abschnitt (18) des Trägers begrenzt ist.

7. Schuppe nach einem der Ansprüche 2 bis 6, **dadurch gekennzeichnet, dass** jeder Befestigungsabsatz (104) ein Durchgangsloch (108) zur Befestigung der Platine (36) aufweist.

8. Vorrichtung zum Sammeln von Erntegut, umfassend:
- einen Träger (14);
- mehrere Schuppen (16), die nacheinander in Längsrichtung an dem Träger (14) befestigt sind, wobei jede Schuppe (16) eine Platte (20) umfasst und mit dem Träger (14) über ein Gelenk (40) verbunden ist, dass es ihr ermöglicht, relativ zu dem Träger zwischen einer Ausgangsposition, in der die Platten (20) der Schuppen (16) eine Sammelfläche für das Erntegut bilden, und einer Position, in der sie einem Hindernis (44) ausweicht, zu schwenken;
- und Mittel zum Zurückholen mindestens einer Schuppe (16) in ihre Ausgangsposition, die eine aufblasbare flexible Hülle (48) umfassen, die mit der mindestens einen Schuppe in Kontakt ist, die sich verformen kann, wenn die Schuppe aufgrund einer von einem Hindernis auf die Schuppe ausgeübten Kraft in die Ausweichposition schwenkt, und die eine Kraft ausüben kann, damit die Schuppe in die Ausgangsposition zurückkehrt, wenn das Hindernis keine Kraft mehr ausübt,
**dadurch gekennzeichnet, dass** die mindestens eine Schuppe (16) nach einem der Ansprüche 1 bis 7 hergestellt ist und dass ein Abschnitt der aufblasbaren flexiblen Hülle (48) in der durchgehenden zentralen Aussparung (110) dieser mindestens eine Schuppe aufgenommen wird.

9. Vorrichtung nach Anspruch 8, **dadurch gekennzeichnet, dass** der Träger (14) einen ebenen Flügel (13) aufweist, an dem die Schuppen (16) befestigt sind.

10. Vorrichtung nach einem der Ansprüche 8 oder 9, **dadurch gekennzeichnet, dass** mehrere der Schuppen (16) nach einem der Ansprüche 1 bis 7 ausgeführt sind und dass die aufblasbare flexible Hülle (48) in Form einer Wurst (52) vorliegt, der zwischen einem gegenüberliegenden Abschnitt einer Oberfläche (18) des Trägers und den Befestigungsplatinen (36) jeder der mehreren Schuppen (16) eingeklemmt ist.

## Claims

1. A scale (16) for a crop collection device which comprises:
- a tray (20);
- and a plate (36) for fixing the scale (16) to a support (14, 18) of the crop collection device,
**characterised in that** the fixing plate (36) comprises a clamping surface which comprises a central through recess (110) which opens longitudinally at its two ends and which is able to receive a longitudinal section of an inflatable flexible envelope (48) interposed vertically between the clamping surface and a facing portion (18) of the support (14).

2. The scale according to claim 1, **characterised in that** the fixing plate (36) is designed as a fixing flange which has two fixing lugs (104), and **in that** the central through recess (110) extends transversely between the two fixing lugs (104).

3. A scale according to claim 2, **characterised in that** the central through recess (110) is delimited by a central surface portion (112).

4. A scale according to claim 3, **characterised in that** the central through recess (110) is delimited by a concave central surface portion (112) in the form of a cylinder arc of longitudinal axis, or by a flat central surface portion.

5. A scale according to claim 3, **characterised in that** the central through recess (110) is delimited by two flat surface portions (114) arranged transversely on either side of the central surface portion (112).

6. Scale according to any one of claims 2 to 5, **characterised in that** each fixing heel (104) is delimited by a flat surface (106) bearing on a facing portion (18) of the support.

7. Scale according to any one of claims 2 to 6, **characterised in that** each fixing lug (104) comprises a through hole (108) for fixing the plate (36).

8. A crop collection device comprising:
- a support (14);
- a plurality of scales (16) fixed longitudinally to the support (14) in succession, each scale (16) comprising a tray (20) and being connected to the support (14) by a hinge (40) enabling it to pivot relative to the support between an initial position in which the trays (20) of the scales (16) form a crop collection surface and an obstacle avoidance position (44);
- and means for returning at least one scale (16) to its initial position, which comprise a flexible inflatable envelope (48) in contact with the said at least one scale, which is capable of deforming when the scale pivots towards the avoidance position as a result of a force exerted by an obstacle on the scale, and which is capable of exerting a force so that the scale returns to the initial position when the obstacle no longer exerts a force, **characterised in that** said at least one scale (16) is made according to any one of claims 1 to 7, and **in that** a section of the inflatable flexible envelope (48) is received in said central through recess (110) of this at least one scale.

9. A device according to claim 8, **characterised in that** the support (14) comprises a flat wing (13) to which the scales (16) are attached.

10. A device according to any one of claims 8 or 9, **characterised in that** a plurality of the scales (16) are made according to any one of claims 1 to 7, and **in that** the flexible inflatable envelope (48) is in the form of a boudin (52) which is clamped between an opposing portion of a surface (18) of the support and the fixing plates (36) of each of said plurality of scales (16).
